# EUROPEAN PATENT APPLICATION

(11) **EP 2 000 206 A1**
(43) Date of publication of application: **10.12.2008**
(21) Application number: 07109502.0
(22) Date of filing: 04.06.2007
(51) Int. Cl.: B01J 33/00, C07C 1/04

(54) **Method for protecting a F-T catalyst support by coating with a wax**

(71) Applicant: SHELL INTERNATIONALE RESEARCH MAATSCHAPPIJ B.V., 2596 HR Den Haag (NL)
(72) Inventor: Van den Brink, Peter John, 1031 CM Amsterdam (NL); Colijn, Hendrik Albertus, 1031 CM Amsterdam (NL); Remans, Thomas Joris, 1031 CM Amsterdam (NL)
(74) Representative: Zeestraten, Albertus W. J.

(57) **Abstract**

A method of strengthening a carrier or a catalyst or catalyst precursor having a particle size of at least 1mm by adding one or more waxes to the particles. One preferred method involves a wax coating on an outer layer of the particles. The present invention can facilitate handling, transport and installation of the particles.

## Description

This invention relates to a method of protecting, reinforcing, or strengthening a catalyst or catalyst precursor, especially a Fischer catalyst or catalyst precursor. The invention further relates to strengthened catalysts and catalyst precursors thus obtained, and to processes in which such strengthened catalysts and catalyst precursors are used.

Many documents are known describing processes for the catalytic conversion of (gaseous) hydrocarbonaceous feedstocks, especially methane, natural gas and/or associated gas, into liquid products, especially methanol and liquid hydrocarbons, particularly paraffinic hydrocarbons.

The Fischer Tropsch process can be used as part of the conversion of hydrocarbonaceous feed stocks into liquid and/or solid hydrocarbons. Generally the feedstock (e.g. natural gas, associated gas and/or coal-bed methane, coal) is converted in a first step into a mixture of hydrogen and carbon monoxide (this mixture is often referred to as synthesis gas or syngas). The synthesis gas is then fed into a reactor where it is converted in one or more steps over a suitable catalyst at elevated temperature and pressure into compounds ranging from methane to high molecular weight modules comprising up to 200 carbon atoms, or, under particular circumstances, even more.

In the Fischer-Tropsch synthesis, as in many other chemical reactions, the catalyst, the reactants and a diluent, if present, in contact with one another usually form a three phase system of gas, liquid and solid. Such three phase systems may be operated, for example, in a slurry-bubble reactor or in a packed-bed reactor.

A slurry-bubble or fluidised bed reactor may comprise a continuous phase of liquid with the solid, relatively fine catalyst particles suspended therein and gaseous reactants flowing as bubbles through the liquid. The relatively fine powder that can suitably be used in a slurry-bubble or fluidised bed reactor generally consists of micron-sized particles, which commonly are particles of 30 to 300 microns.

A packed-bed, or fixed bed, reactor may comprise a packed bed of solid, relatively coarse catalyst particles through which there is a flow of gas and liquid. Normally such particles have a longest internal straight length of at least 1mm. The current invention relates to catalysts and catalyst precursors suitable for use in a packed-bed reactor and a longest internal straight length of at least 1mm.

In a packed bed reactor catalyst particles are relatively large and can have different shapes and sizes. For example, in a fixed bed reactor beads, spheres, saddles or the like can be used. Also extrudates, for example with a trilobe shape, can be used in a packed bed reactor. Other possibilities are catalysts applied to a support, e.g. catalysts coated on shavings or pieces of bent wire or bent tape. The catalysts can also be in the form of fixed structures (or arranged packings) such as gauzes, corrugated sheet material which may or may not be perforated with holes, woven or non-woven structures, honeycombs and foams. Some types of packed beds may be referred to as fixed bed, multi-tubular fixed bed, immobilised slurry, trickle flow fixed bed, down-flow trickle flow packed bed, liquid up-flow packed bed, up-flow liquid full fixed bed, etc.

The type, size, and shape of the catalyst used in a packed bed reactor may have an influence on the quantity of catalytically active component per reactor volume, the pressure drop over the packed catalyst bed, and the ease with which the reactor can be filled. In a packed bed design, very small catalyst particles are undesired. This because they may cause handling problems, they increase the pressure drop over the reactor when the reactor is put to use, they may end up in the product, etc.

Nevertheless, due to the delicate nature of the catalysts or catalyst precursors, broken catalyst particles, fines and dust are often formed during transport of packed bed particles. Also when carriers for catalysts are transported broken carrier particles, fines and dust can be formed. When installing packed bed catalyst or catalyst precursor particles into a reactor broken catalyst particles, fines and dust are often formed.

It is thus desired to protect, reinforce, or strengthen catalysts or catalyst precursors that are suitable for a packed catalyst bed before these are transported and/or before loading into the reactor. It is also desired to protect, reinforce, or strengthen the carrier as such, without catalytically active component or precursor therefore.

According to a first aspect of the present invention, there is provided a method of strengthening a carrier having a particle size of at least 1mm, said carrier being suitable as carrier for a catalyst, comprising at least the following step:
(a) before application of one or more catalytically active components or precursors therefor to the carrier, adding one or more waxes to the carrier.

The carrier may be calcined prior to step (a). The carrier is preferably suitable as carrier for a Fischer Tropsch catalyst.

Particles having a particle size of at least 1mm are defined as particles having a longest internal straight length of at least 1mm. Optionally, the carrier is first strengthened with wax, for example before transportation of the carrier, and at a later stage the wax or a part of the wax is removed, and in a subsequent step the carrier is brought together with one or more catalytically active components or precursors therefor.

According to a second aspect of the present invention, there is provided a method of strengthening a catalyst or catalyst precursor comprising a catalytically active component or a precursor therefor, supported on a carrier having a particle size of at least 1mm, comprising at least the following step:
(a) before use of the catalyst or catalyst precursor, adding one or more waxes to the catalyst or catalyst precursor.

The use of the catalyst or catalyst precursor is defined as its use as catalyst, for example as catalyst for a Fischer Tropsch reaction.

According to a third aspect of the invention there is provided a method of preparing and strengthening a catalyst or catalyst precursor, the method comprising: (i) bringing together one or more catalytically active components or precursors therefor and one or more carriers having a particle size of at least 1mm; and
(a) before use of the catalyst or catalyst precursor, adding one or more waxes to the so-formed catalyst or catalyst precursor of step (i).

The material of step (i) is typically calcined prior to step (a).

The or each catalytically active component or precursor therefor may be in its/their oxidised state whilst step (a) of the second or the third aspect of the invention is performed. The catalyst may then be reduced at a later stage, before use. Preferably the catalyst is reduced in situ, i.e. in the reactor, before use. During reduction the wax may decompose or hydrogenate. Alternatively, the or each catalytically active component or precursor therefor is reduced before step (a) of the second or the third aspect of the invention.

It is also possible to combine the first and the second or the first and the third aspect of the invention. The particle size of a carrier, catalyst or catalyst precursor strengthened according to one or more methods of the present invention is at least 1mm, preferably at least 1.5 mm, more preferably at least 2mm.

Preferably wax strengthened particles can be stored and/or transported at about 40 °C, preferably at about 60 °C, more preferably at about 80 °C, for at least three days without the particles sticking together.

Preferably, the wax is substantially non-tacky below a temperature of about 40 °C.

The wax may include esters, ethers, alcohols, paraffins and alpha olefins. One preferred wax comprises a C₂₀₊ alpha olefin or paraffin, more preferably a C₂₀₋₁₀₀ alpha paraffin.

Other examples of waxes suitable for use in the present invention include natural waxes such as petroleum waxes, e.g., paraffin waxes and hydrocarbon waxes; fatty acid oil, beeswax; mineral waxes, e.g., microcrystalline montan wax; vegetable waxes such as carnauba wax and synthetic waxes such as polyethylene, polypropylene, polymethylene, chemically modified waxes, and polymerized alpha-olefins and more especially Fischer-Tropsch waxes.

One advantage of using Fischer Tropsch waxes when the catalyst is a Fischer Tropsch catalyst, is that the Fischer Tropsch catalyst and reactor are designed for contact with such waxes during the reaction and so their use to coat the catalyst before use is less likely to poison the catalyst or reactor system compared to adding foreign waxes.

Preferably the wax is a hydrocarbon wax, more preferably a branched hydrocarbon wax having a melting point ranging from 40°C to 90°C, preferably from 50°C to 80°C, and more preferably 55°C to 75°C.

Preferably therefore at least one of the waxes of step (a), preferably all of the waxes of step (a), are liquid at a temperature of more than 40°C, preferably more than 60°C, especially more than 80 °C.

Typically the wax comprises at least 30wt% paraffinic molecules, more typically 50wt% paraffinic molecules, preferably more than 70wt% especially more than 90wt%.

The wax may be at least 95 wt% C₁₀-C₁₀₀.

Polyethylene waxes suitable for use in the coating composition of the invention are represented by the following general formula: (-CH₂CH₂-)ₙ. Polyethylene waxes having the above general formula are commercially available from Baker Petrolite under the trademark PETROLITE(R). Preferred polyethylene waxes are those having an average molecular weight ranging from about 650 to about 30,000 and a particle size ranging between 1 micron and 140 microns.

The or each wax in step (a) may be added to the carrier, catalyst or catalyst precursor by spraying, dipping, coating, impregnating and soaking; preferably dipping.

Preferably the or each wax of step (a) fills more than 10% of the pore volume of the particle, typically more than 30%, preferably more than 50%, more preferably more than 70%. The amount of wax deposited varies depending on the technique used to deposit the wax. For example spraying the wax onto the particle can typically result in less than 30% of the pores being filled with wax whilst dipping the catalyst into wax can result in almost 100% of the pores being filled with wax.

Certain embodiments have wax added only in pores of particles of the catalyst or catalyst precursor which are within 20%, preferably 10%, and for certain embodiments, within 5% from an outer surface of the catalyst particles thus forming "egg-shell" type particles.

For such embodiments up to 40%, preferably up to 30% and, for certain embodiments, up to 20% of the total number of pores comprise wax, although this may represent 100% of pores within the given distance from the surface of the particles.

Thus an advantage of such embodiments (where a limited proportion of total pores comprise wax) include the reduced weight of the strengthened particles and the reduced amount of wax required; whilst still providing benefits to the strength of the particles and also normally a reduction in the dust and fines formation produced by the particles upon handling. A further benefit of such embodiments is where a strengthened catalyst or catalyst precursor is reduced by hydrogen in situ; the reduced proportion of wax used, allows easier access for the hydrogen to reduce the catalytically active component during said reduction.

"Egg-shell" type particles may be formed by spray coating the or each wax of step (a) to optionally heated particles.

Preferably the or each wax of step (a) is added in liquid form at a temperature of < 250°C, preferably around 200°C.

Preferably a step (b) is performed following step (a), step (b) comprising absorbing any superfluous wax with an absorbent material.

Optionally a step (c) is performed following step (a), and when step (b) is performed, also following step (b); step (c) comprising heating the particle to a temperature sufficient to melt the wax.

Preferably step (a) is performed outside the reactor in which the catalyst is used.

The particle, which may be a carrier, a catalyst or a catalyst precursor, may be a shaped particle. The term 'shaped' relates to a process wherein particles are formed from a powder, each of particles having a particular shape. Suitable processes are pelletizing, (wheel) pressing and extrusion.

The volume of shaped particles is suitably between 1 and 250 mm³, preferably between 2 and 100 mm³, more preferably between 4 and 50 mm³, especially in the case that an extrusion process is used.

The carrier (i.e. a carrier suitable for use as a carrier for a catalyst or a catalyst precursor, or a carrier of a catalyst or a catalyst precursor) preferably comprises of between 70 and 100 wt% of crystalline titania. The non-titania component may be, for example, a binder. Alternatively, other refractory oxides may be used such as silica or alumina; indeed carbon may be used as the carrier.

One preferred method of preparing a shaped particle is by extruding or otherwise forcing a granular or powdered catalyst or catalyst precursor material into various shapes under certain conditions, which will ensure that the particle retains the resulting shape, both during reaction as well as during regeneration..

Alternatively, the particle can be prepared by coating processes, e.g. spray coating, dip-coating and painting upon a support. The coated material, optionally comprising a catalytically active component or precursor therefore, on the support preferably comprises of between 70 and 100 wt% of crystalline titania. The non-titania component of the coated material may be, for example, a binder. Alternatively, other refractory oxides may be used such as silica or alumina.

If present, the support in the particle may be an inorganic material, such as a refractory oxide, a ceramic material, a metal, carbon, or an organic material such as a polymer or another resinous material. Suitable refractory oxides for use as the core are silica, alumina, zirconia, magnesia and titania, and mixtures thereof. Suitable metals are aluminium, iron, copper, titanium and mixtures comprising one or more of these metals, like steel and brass. Examples of suitable organic materials are polystyrenes, polyolefins, celluloses, hydrocarbon resins and epoxy resins.

The surface of such a support may be pre-treated to achieve a better adhesion of the outer layer of the support with the coated material. The surface of the support may be modified, e.g. by removing impurities. The support may be washed with water or diluted acid, such as aqueous phosphoric acid. The support may be treated with a refractory oxide sol, such as a silica sol or an alumina sol, or a paint, such as a zirconium oxide paint. If the support comprises a refractory oxide, it may be pre-treated by calcination, for example by heating at elevated temperature, preferably at a temperature between 400 and 750 °C, more preferably between 450 and 650 °C. The duration of the calcination is typically from 5 minutes to several hours, preferably from 15 minutes to 4 hours. Suitably, the calcination is carried out in an oxygen-containing atmosphere, preferably air.

When preparing a catalyst or catalyst precursor, the catalytically active component preferably is an element of Group VIII of the periodic table of the elements, preferably cobalt. Metal oxides and/or metals may be used with the active component as promoters typically selected from zirconium, titanium, chromium, vanadium and manganese, especially manganese. Such catalysts are known in the art and have been described for example, in the specifications of WO 9700231A and US 4595703.

The catalytically active component, which may be a catalytically active metal, and the promoter, if present, may be deposited on the carrier by any suitable treatment, such as impregnation and deposition precipitation.

Alternatively, and only in the case of shaped particles, a catalyst or catalyst precursor may be prepared by mixing a source of brookite particles and a source of catalytically active metal and optionally metal promoters, kneading the mixture and extruding the mixture to obtain a shaped catalyst precursor after the typical drying and, optionally, calcinations steps.

A kneading/mulling method for the preparation of a shaped catalyst or a catalyst precursor using titania as catalyst carrier can be performed comprising the following steps: (a) mixing (1) titania in which at least 50 wt% of the crystalline titania is present as brookite, (2) a liquid, and (3) a Group VIII containing compound, which is at least partially insoluble in the amount of liquid used, to form a mixture, (b) shaping and drying of the mixture thus-obtained, and (c) calcination of the mixture thus-obtained.

The liquid may be any of suitable liquids known in the art, for example water; ammonia; alcohols, such as methanol, ethanol and propanol; ketones, such as acetone; aldehydes, such as propanal and aromatic solvents, such as toluene. A most convenient and preferred liquid is water.

Typically, the ingredients of the mixture are mulled for a period of from 5 to 120 minutes, preferably from 15 to 90 minutes. During the mulling process, energy is put into the mixture by the mulling apparatus. The mulling process may be carried out over a broad range of temperature, preferably from 15 to 90 °C. As a result of the energy input into the mixture during the mulling process, there will be a rise in temperature of the mixture during mulling. The mulling process is conveniently carried out at ambient pressure. Any suitable, commercially available mulling machine may be employed. The amount of energy used in the mulling process is suitably between 0.05 and 50 Wh/min/kg, preferably between 0.5 and 10 Wh/min/kg.

To improve the flow properties of the mixture, it is preferred to include one or more flow improving agents and/or extrusion aids in the mixture prior to extrusion. Suitable additives for inclusion in the mixture include fatty amines, quaternary ammonium compounds, polyvinyl pyridine, sulphoxonium, sulphonium, phosphonium and iodonium compounds, alkylated aromatic compounds, acyclic mono-carboxylic acids, fatty acids, sulphonated aromatic compounds, alcohol sulphates, ether alcohol sulphates, sulphated fats and oils, phosphonic acid salts, polyoxyethylene alkylphenols, polyoxyethylene alcohols, polyoxyethylene alkylamines, polyoxyethylene alkylamides, polyacrylamides, polyols and acetylenic glycols. Preferred additives are sold under the trademarks Nalco and Superfloc.

To obtain strong extrudates, it is preferred to include in the mixture, prior to extrusion, at least one compound which acts as a peptising agent for the titania. Suitable peptising agents for inclusion in the extrudable mixture are well known in the art and include basic and acidic compounds. Examples of basic compounds are ammonia, ammonia-releasing compounds, ammonium compounds or organic amines. Such basic compounds are removed upon calcination and are not retained in the extrudates to impair the catalytic performance of the final product. Preferred basic compounds are organic amines or ammonium compounds. A most suitable organic amine is ethanol amine. Suitable acidic peptising agents include weak acids, for example formic acid, acetic acid, citric acid, oxalic acid, and propionic acid.

Optionally, burn-out materials may be included in the mixture, prior to extrusion, in order to create macropores in the resulting extrudates. Suitable burn-out materials are commonly known in the art.

The total amount of flow-improving agents/extrusion aids, peptising agents, and burn-out materials in the mixture preferably is in the range of from 0.1 to 20% by weight, more preferably from 0.5 to 10% by weight, on the basis of the total weight of the mixture. Examples of suitable catalyst preparation methods as described above are disclosed in WO-A-9934917.

The invention also provides a carrier having a particle size of at least 1mm, said carrier being suitable as carrier for a catalyst or catalyst precursor comprising a catalytically active component or a precursor therefor, which carrier is at least partly coated in one or more waxes.

The invention also provides a catalyst or catalyst precursor comprising a catalytically active component or a precursor therefor, supported on a carrier having a particle size of at least 1mm, which catalyst or catalyst precursor is at least partly coated in one or more waxes. Preferably such a carrier, catalyst or catalyst precursor is prepared by a method described herein.

Embodiments of the present invention will now be described by way of example only.

### EXAMPLES

Three samples of a Fischer Tropsch catalyst (extrudates) comprising a titania support, cobalt active component and manganese promoter were tested for strength and attrition rate. The first sample was a control sample and did not undergo the wax coating of the present invention. The second and third samples were dipped into different types of wax. In each example of the present invention, the wax was at a temperature of 180 °C; superfluous wax was removed after dipping.

The first wax was a Fischer Tropsch synthetic wax. It was a Fischer Tropsch paraffinic fraction with some olefins and oxygenates in it, starting at about C11 and having at least some fraction heavier than C100.

The second wax was also a Fischer Tropsch synthetic wax. It was a Fischer Tropsch paraffinic fraction starting at about C23 and having at least 10% of its product heavier than C100.

Mechanical strength of particles can be measured in many ways, but include flat plate crushing strength (FPCS) and bulk crush strength (BCS).

Flat plate crushing strength is generally regarded as a test method to measure strength at which catalyst particles collapse. The strength can be related to the compressive strength of concrete being tested in a similar test method (i.e. 10 cm cubed sample between plates), but on a larger scale. Currently, there is no national or international test or ASTM for flat plate crushing strength. However, the "compression test" for concrete, used to measure compressive strength, is well known in the art.

Naturally, any comparison of flat plate crushing strength must be made between equivalently shaped particles. Usually, it is made between the "top" and "bottom" sides of particles. Where the particles are regularly shaped such as squares, it is relatively easy to conduct the strength tests and make direct comparison.

The bulk crush strength (BCS) of catalyst material can be determined as follows. The sample, preferably 300 or more catalyst particles, is placed in a sample holder. The sample holder may be a cylinder. Upon the particles in the holder a pressure is applied, for example inserting a piston in the cylinder and applying a force onto the piston. Optionally the catalyst particles are covering with steel balls before the piston is inserted in the cylinder. The amount of fines formed during the test is determined. Material below 0.84 mm is judged as being "fines".

The bulk crush strength is the pressure in Mpa at which the quantity of fines formed amounts to 0.5% of the total sample weight.

The attrition index of catalyst material can be determined as follows: the catalyst material is rotated within a (simple) drum with one internal baffle plate, over a standard number of drum rotations. The loss of material can then be determined as the change in weight of material below 0.84 mm, judged as being "fines".

The results of the treatment are summarised in table 1 below.

**Table 1**

| Treatment | FPCS (N/cm) | BCS (MPa) | Fines formed at 600 N BCS (%) | Attrition Index (%) |
|---|---|---|---|---|
| No treatment - control | 128 | 0.89 | 1.113 | 94.5 |
| Wax 1. 7 second immersion | 169 | 1.38 | 0.244 | 95.5 |
| Wax 2. 5 second immersion | 137 | >1.6 | 0.067 | 97.0 |

Thus it can be observed from table 1 that the strength (FPCS and BCS) is significantly increased for each embodiment of the invention compared to the control sample. Moreover the amount of dust forming (based on attrition index) produced is much less.

Three days after treatment it was noted that the extrudates treated with wax in accordance with the present invention and stored at 80 °C were not adhering to each other; thus storage and loading of such a catalyst into a reactor is not hindered by their wax coating.

Improvements and modifications may be made without departing from the scope of the invention.

## Claims

1. A method of strengthening a carrier having a particle size of at least 1mm, said carrier being suitable as carrier for a catalyst, preferably suitable as carrier for a Fischer Tropsch catalyst, comprising at least the following step:
(a) before application of one or more catalytically active components or precursors therefor to the carrier, adding one or more waxes to the carrier.

2. A method of strengthening a catalyst or catalyst precursor comprising a catalytically active component or a precursor therefor, supported on a carrier having a particle size of at least 1mm, comprising at least the following step:
(a) before use of the catalyst or catalyst precursor, adding one or more waxes to the catalyst or catalyst precursor.

3. A method as claimed in claim 2 wherein the catalyst or catalyst precursor is a Fischer Tropsch catalyst or precursor therefor.

4. A method as claimed in any preceding claim wherein at least one of the waxes of step (a), preferably all of the waxes of (a) are liquid at a temperature of above 40°C, preferably above 60°C, more preferably above 80°C.

5. A method as claimed in any preceding claim, wherein the wax comprises at least 50% paraffinic wax.

6. A method as claimed in any preceding claim, wherein the wax is only provided in pores of the particle which are within 10% from an outer surface of the catalyst particle.

7. A method as claimed in any preceding claim wherein the or each wax in step (a) is added to the particle by spraying, dipping, coating, impregnating or soaking.

8. A method as claimed in any preceding claim wherein the or each wax of step (a) fills more than 10%, preferably more than 50%, of the pore volume of the catalyst.

9. A method for transporting carriers or catalyst particles or catalyst precursor particles, **characterised in that** the particles are first treated according to a method according to any one of claims 1 to 8.

10. A method for installing catalyst particles or catalyst precursor particles in a reactor, **characterised in that** the particles are first treated according to a method according to any one of claims 2 to 8.
